# FASCICULE DE BREVET EUROPEEN

(11) **EP 3 828 737 B1**
(45) Date de publication et mention de la délivrance du brevet: **06.09.2023**
(21) Numéro de dépôt: 20210083.0
(22) Date de dépôt: 26.11.2020
(51) Int. Cl.: G06F 21/00, H04L 9/08, G06F 21/73

(54) **ARCHITECTURE D'ÉCHANGES DE DONNÉES D'INTÉRÊT COMPRENANT UNE PLURALITÉ D'OBJETS CONNECTÉS À RESSOURCES CONTRAINTES**
DATENAUSTAUSCH-ARCHITEKTUR MIT EINER PLURALITÄT VON VERBUNDENEN OBJEKTEN MIT BEGRENZTEN RESSOURCEN
DATA EXCHANGE ARCHITECTURE COMPRISING A PLURALITY OF CONNECTED OBJECTS WITH LIMITED RESOURCES

(30) Priorité: 27.11.2019 FR 1913314
(43) Date de publication de la demande: 02.06.2021
(73) Titulaire: THALES, 92400 Courbevoie (FR)
(72) Inventeur: BEN JABALLAH, Wafa, 91767 PALAISEAU CEDEX (FR); BETTAN, Olivier, 91767 PALAISEAU CEDEX (FR); MARTINS, Cyrille, 91767 PALAISEAU CEDEX (FR); PIATTE, Cyrille, 91767 PALAISEAU (FR)
(74) Mandataire: Lavoix

(56) Documents cités:
- CN-A- 109 756 872
- US-A1- 2018 270 231
- KUN YANG ET AL: "CDTA", ACM TRANSACTIONS ON DESIGN AUTOMATION OF ELECTRONIC SYSTEMS, ACM, NEW YORK, NY, US, vol. 22, no. 3, 5 avril 2017 (2017-04-05), pages 1-31, XP058326369, ISSN: 1084-4309, DOI: 10.1145/3005346
- ZARROUK RANDA ET AL: "Non-Repeatable Clone-Resistant Group Device Identity", 2019 INTERNATIONAL CONFERENCE ON CYBER SECURITY FOR EMERGING TECHNOLOGIES (CSET), IEEE, 27 octobre 2019 (2019-10-27), pages 1-7, XP033664635, DOI: 10.1109/CSET.2019.8904893

## Description

La présente invention concerne une architecture d'échanges de données d'intérêt comprenant une pluralité d'objets connectés à ressources contraintes.

Le domaine de l'invention est celui des objets connectés connu dans l'état de la technique également sous le terme anglais « *Internet of Things* » (abréviation « *loT* ») ou « *Internet des objets* » en français.

L'article de Kun Yang et al. intitulé « CDTA : A Comprehensive Solution for Counterfeit Détection, Traceability, and Authentication in the loT Supply Chain » décrit un système basé sur RFID pour la détection de contrefaçons.

Le document CN 109 756 872 A décrit un procédé de communication de bout en bout d'objets connectés.

De manière connue en soi, un objet connecté représente un objet à ressources contraintes. Ces contraintes sont imposées par la nature de cet objet et/ou par le domaine de son utilisation.

Ainsi, par exemple, un tel objet présente généralement un dispositif électronique de dimensions réduites qui met en oeuvre un certain nombre d'opérations à distance.

Ces opérations peuvent comprendre par exemple une observation d'un élément associé à cet objet et la transmission des données générées par rapport à cette observation à un serveur distant.

Ainsi, de manière connue en soi, un tel objet connecté comprend un module de détection permettant alors d'observer les caractéristiques de l'élément associé en générant des données d'intérêt, un module d'émission permettant de transmettre les données générées par exemple sous la forme des signaux radioélectriques et un module d'alimentation tel qu'une batterie permettant d'alimenter l'ensemble de ces composantes.

Compte tenu des dimensions réduites de l'objet, ces composantes sont généralement préprogrammées au cours d'une phase de fabrication de cet objet.

Ensuite, les objets connectés sont déployés dans les emplacements physiques dans lesquels ils sont destinés à servir lors d'une phase de déploiement.

Après cette phase de déploiement, il suit une phase de fonctionnement lors de laquelle les objets sont connectés à un réseau informatique et sont donc aptes à générer et à transmettre des données d'intérêt ce qui correspond à leur fonctionnement nominal.

Finalement, lorsque l'objet connecté n'est plus opérationnel ou lorsque son fonctionnement n'est plus nécessaire, il est démantelé au cours d'une phase de démantèlement.

On conçoit alors que chacune de ces phases de vie d'un objet connecté présente des risques de sécurité très différents.

Ainsi, lorsque l'objet connecté est associé à un élément sensible, sa sécurité doit être assurée lors de chacune de ses phases de vie et cela en sachant que ces phases sont généralement mises en oeuvre par des tiers différents. Cela ne fait alors qu'augmenter le niveau de risques de sécurité.

La présente invention a pour objectif de proposer une architecture d'échanges permettant d'assurer un bon niveau de sécurité tout au long du cycle de vie de chaque objet connecté.

À cet effet, l'invention a pour objet une architecture d'échanges de données d'intérêt selon la revendication 1.

Suivant d'autres caractéristiques de l'invention, l'architecture est selon l'une quelconque des revendications 2 à 10.

Ces caractéristiques et avantages de l'invention apparaîtront à la lecture de la description qui va suivre, donnée uniquement à titre d'exemple non limitatif, et faite en référence aux dessins annexés, sur lesquels :
- [Fig 1] la figure 1 est une vue schématique d'une architecture d'échanges de données d'intérêt selon l'invention, l'architecture d'échanges comportant notamment une pluralité d'objets connectés ; et
- [Fig 2] la figure 2 est une vue schématique de l'un des objets connectés de la figure 1.

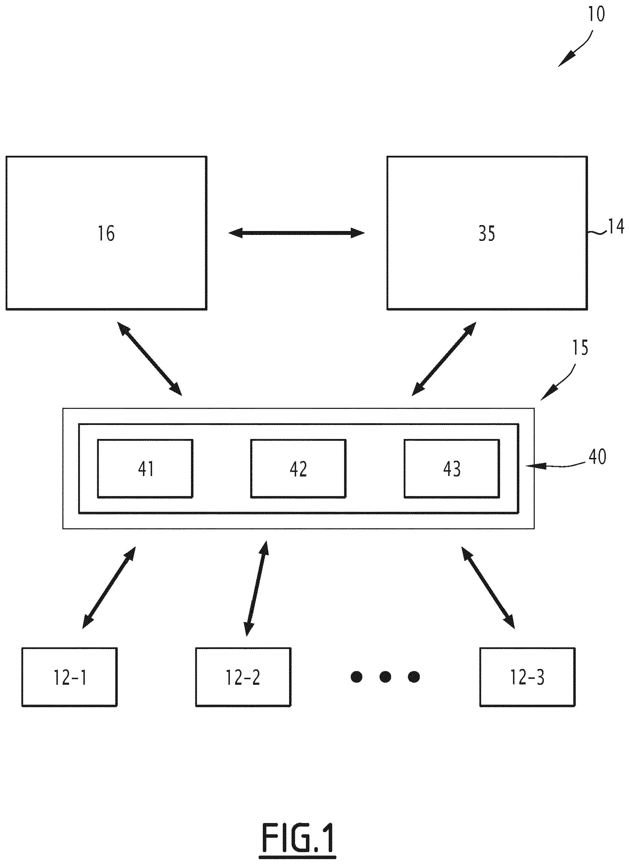

La figure 1 représente en effet une architecture 10 d'échanges de données d'intérêt entre une pluralité d'objets connectés 12-1 à 12-3 et un utilisateur 14.

Bien entendu, de manière générale, l'architecture 10 peut comprendre un nombre quelconque d'objets connectés et d'utilisateurs.

Dans l'exemple de cette figure 1, l'architecture 10 comprend en outre une passerelle 15 et un système de supervision 16.

Chacun des objets 12-1 à 12-3 est configuré pour générer et transmettre des données, dites des données d'intérêt, à distance via par exemple des signaux radioélectriques.

En particulier, chacun des objets est associé à un élément d'observation et apte à générer des données caractérisant cet élément d'observation.

Les données d'intérêt générées par chacun des objets 12-1 à 12-3 peuvent ainsi représenter la localisation de cet élément ou ses caractéristiques physiques telles que par exemple sa température, sa vitesse, etc.

Avantageusement, chaque objet 12-1 à 12-3 est associé à une pluralité d'attributs permettant à différents utilisateurs d'accéder aux données issues de cet objet comme cela sera expliqué par la suite.

Les objets connectés 12-1 à 12-3 sont par exemple tous analogues entre eux.

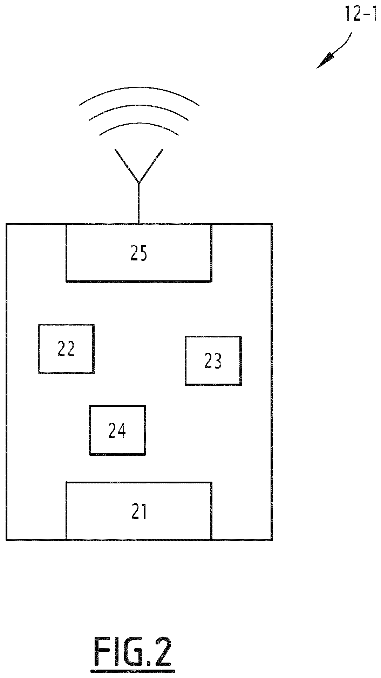

Ainsi, par la suite, seul l'objet 12-1 sera expliqué en détail en référence à la figure 2.

Comme cela est représenté sur la figure 2, l'objet connecté 12-1 comprend un module de détection 21, un microcontrôleur de contrôle d'accès 22, une mémoire 23, un processeur 24 et un module de communication 25.

Le module de détection 21 est apte à générer des données d'observation relatives à l'élément auquel cet objet connecté 12 est associé.

Ce module de détection 21 présente par un exemple un capteur d'une caractéristique physique de l'élément correspondant, telle que par exemple la température de cet élément, sa vitesse, etc.

Le microcontrôleur de contrôle d'accès 22 est apte à fournir un identifiant physique unique de l'objet connecté.

Selon un exemple de réalisation, ce microcontrôleur 22 est implémenté selon une technologie connue dans l'état de l'art sous le terme anglais de « *Physical Unclonable Function* » ou plus couramment « PUF » qui peut être traduit en français comme fonction physique non-clonable.

Ce microcontrôleur 22 forme une entité physique définissant l'identité de l'objet connecté et présente donc une empreinte numérique de cet objet.

Cette empreinte est générée en utilisant une clef cryptographique obtenue à partir d'une suite aléatoire générée de manière incontrôlée et imprédictible lors d'une phase de fabrication de cet objet.

Ainsi, avantageusement selon l'invention, cette suite aléatoire est générée en utilisant un générateur de nombres aléatoires matériel intégré également dans l'objet connecté 12-1. Ce générateur est par exemple un générateur connu dans l'état de l'art sous le terme anglais de « *True tandem Number Generator* » ou « TRNG ».

Ainsi, selon l'invention, ce générateur est intégré dans le microcontrôleur de contrôle d'accès 22 ou est associé avec celui-ci.

La mémoire 23 présente par exemple une mémoire non-volatile du type « flash » et apte à stocker une pluralité de ressources logiciels.

Ces ressources logicielles peuvent être de type « *firmware* » dans la mesure où elles sont installées lors de la phase de fabrication de l'objet et forment donc des logiciels de base ou « software » dans la mesure où elles peuvent être installées par un système externe au cours d'une phase de déploiement ou de fonctionnement de l'objet connecté 12-1.

La mémoire 23 est associée à des moyens de vérification d'intégrité permettant de tracer toute modification de chaque ressource logicielle.

Selon un exemple de réalisation de l'invention, ces moyens de vérification d'intégrité se présentent sous la forme d'une ressource logicielle stockée également dans la mémoire 23 et exécutable par le processeur 24.

Selon un autre exemple de réalisation, ces moyens de vérification se présentent au moins partiellement sous la forme d'une entité physique intégrée également dans l'objet connecté 12-1 et associée alors à la mémoire 23.

Le processeur 24 est apte à générer des données d'intérêt en exécutant une ou plusieurs ressources matérielles stockées dans la mémoire 23. Ces données d'intérêt sont notamment générées à partir des données d'observation générées alors par le module de détection 21.

En outre, le processeur 24 est apte à actionner des moyens de désactivation.

Ces moyens de désactivation permettent de désactiver le fonctionnement de l'objet connecté 12-1 en effaçant par exemple la mémoire 23.

Ces moyens de désactivation présentent par exemple une ressource logicielle protégée qui est stockée dans un domaine protégé de la mémoire 23.

Selon un autre exemple de réalisation, ces moyens de désactivation se présentent sous la forme d'un circuit physique dont le fonctionnement peut alors être déclenché par le processeur 24.

Le module de communication 25 est apte à communiquer notamment avec la passerelle 15 en utilisant par exemple un protocole de transmission sécurisé ou non-sécurisé.

Dans le premier cas, ce protocole de transmission est par exemple un protocole de type LoRaWAN (de l'anglais « *Long Range Wide-Area Network* »)*.*

Le module de communication 25 est à associés à des moyens de chiffrage permettant de chiffrer des données d'intérêt à transmettre en utilisant au moins une clef de chiffrement fixe.

Par « clef de chiffrement fixe », on entend une clef de chiffrement appliquée systématique pour chiffrer des données sortantes, indépendamment de la session de transmission lors de laquelle les données sont transmises. En particulier, une telle clef de chiffrement n'est par générée ou négociée pour une session donnée mais est appliquée à chaque session indépendamment du destinataire.

En particulier, en fonction du protocole de transmission utilisé, les données d'intérêt chiffrées peuvent être chiffrées encore une fois mais en utilisant cette fois une clef générée pour les besoins du protocole utilisé.

Les moyens de chiffrage associés au module de communication 25 définissent en outre un espace de stockage qui peut faire partie de la mémoire 23 ou alors, former une entité indépendante.

Cet espace de stockage permet de garder une ou plusieurs clefs fixes.

Lorsque cet espace se présente sous la forme d'une entité physique indépendante, les moyens de désactivation sont aptes à effacer également le contenu de cet espace de stockage.

Finalement, avantageusement selon l'invention, l'objet connecté 12-1 est réalisé selon la technologie connue sous le nom anglais de « *Trust Zone* » ou zone de confiance en français. Cette technologie permet de diviser l'objet connecté en au moins deux partitions de confiance ayant des niveaux de sécurité différents.

De préférence, parmi les éléments précités, au moins le processeur 24 et le microcontrôleur de contrôle d'accès 22 se trouvent dans la zone ayant le plus grand niveau de sécurité. Avantageusement, la mémoire 23 et le module de communication 25 se trouvent également dans cette zone.

Dans l'exemple de la figure 1, l'utilisateur 14 est représenté par un terminal d'accès 35 utilisable alors par cet utilisateur 14 pour communiquer notamment avec la passerelle 15 et le système de supervision 16.

Ainsi, dans l'exemple représenté, ce terminal de communication présente une tablette ou un téléphone qui est alors connecté(e) à la passerelle 15 et au système de supervision 16 via par exemple un réseau global tel que Internet.

En particulier, ce terminal d'accès 35 permet de recevoir des données chiffrées issues du serveur de supervisions 15 en utilisant un protocole adapté.

Le terminal d'accès permet en outre de déchiffrer au moins certaines des données d'intérêt chiffrées en utilisant une clef de déchiffrement.

Le système de supervision 16 présente un système distant permettant de superviser le fonctionnement notamment des objets connectés 12-1 à 12-3.

En particulier, le système de supervision 16 permet de générer au moins une clef de chiffrage fixe pour chacun des objets connectés. Une telle clef est générée par exemple en fonction des attributs associés à chaque objet correspondant, en utilisant par exemple la technologie ABE (de l'anglais « *Attribute Based Encryption* ») signifiant « Chiffrement basé sur attributs » en français.

Ce système de supervision 16 permet également d'authentifier l'utilisateur 14 et de générer une clef de déchiffrement destinée à l'utilisateur 14 pour lui permettre de déchiffrer au moins certaines des données d'intérêt issues d'au moins certains des objets connectés 12-1 à 12-3.

En particulier, tout comme dans le cas des clefs de chiffrement, la clef de déchiffrement est générée sur la base d'attributs associés à l'utilisateur 14 en utilisant une politique d'accès prédéterminée.

Notamment, pour générer la clef de déchiffrement, le système de supervision 14 est apte à construire pour l'utilisateur 14 une structure d'accès à partir de la politique d'accès et les attributs de cet utilisateur 14.

Cette structure d'accès est construite par exemple par un moteur de décision mettant en oeuvre la technologie de type ABAC (de l'anglais « *Attribute Based Access Control* ») signifiant « Contrôle d'accès basé sur attributs » en français.

Puis, à partir de cette structure, le système de supervision 16 est apte à générer la clef de déchiffrement destinée à l'utilisateur.

Ainsi, à la réception de données d'intérêt chiffrées par l'un des objets 12-1 à 12-3 en utilisant sa clef de chiffrement fixe, l'utilisateur 14 applique sa clef de déchiffrement pour déchiffrer ces données. Étant donné que cette clef de déchiffrement est générée en fonction des attributs de l'utilisateur 14, elle permet de déchiffrer les données correspondantes uniquement lorsque les attributs de l'utilisateur 14 permettent de le faire.

Dans le cas contraire, les données d'intérêt reçues ne sont pas déchiffrées par l'utilisateur ce qui signifie qu'il n'a pas de droit d'accès à celles-ci.

Ce type de chiffrement permet une gestion très fine d'accès aux données d'intérêt issues des objets connectés et est dite « grain fin ».

La passerelle 15 permet de mettre en oeuvre les échanges de données entre le système de supervision 16 et les objets connectés 12-1 à 12-3 et entre l'utilisateur 14 et les objets connectés 12-1 à 12-3.

En complément, la passerelle 15 permet de mettre en oeuvre des échanges de données entre au moins certains des objets 12-1 à 12-3 et éventuellement, entre le système de supervision 16 et l'utilisateur 14.

La passerelle 15 permet en outre de sécuriser ces échanges durant tout le cycle de vie de chaque objet connecté 12-1 à 12-3 et comprend à cet effet un système de sécurité 40.

Pour ce faire et comme cela est visible sur la figure 1, ce système de sécurité 40 comprend un module d'observation 41, un module renforcement de sécurité 42 et un module d'enregistrement 43.

Ces modules sont par exemple implémentés au moins partiellement sous la forme de logiciels exécutables un processeur dédié et/ou sous la forme de circuits logiques programmables par exemple de type FPGA (de l'anglais « *Field-Programmable Gate Array »).*

Le module d'observation 41 permet d'observer l'ensemble des données échangées entre les objets connectés 12-1 à 12-3 et tout autre dispositif électronique, comme par exemple le terminal 35, le système de supervision 16 ou tout autre dispositif pouvant avoir l'accès à ces données via la passerelle 15.

Le module de renforcement de sécurité 42 permet d'assurer la sécurité des objets connectés 12-1 à 12-3 durant chaque phase de leur vie en mettant en oeuvre une pluralité de routines de sécurité expliquées en détail par la suite.

Le module d'enregistrement 43 permet de découvrir tout nouvel objet connecté accessible depuis la passerelle 15 et ensuite, d'identifier et d'enregistrer cet objet dans le réseau.

Des fonctionnalités supplémentaires de ces modules 41 à 43 seront désormais expliquées en référence à chacune des phases de vie de l'un des objets connecté 12-1 à 12-3, par exemple de l'objet 12-1.

Il est clair que ces fonctionnalités peuvent être appliquées de manière analogue à chaque autre objet connecté.

En particulier, comme mentionnée précédemment, le cycle de vie de chaque objet connecté 12-1 à 12-3 définit une phase de fabrication lors de laquelle cet objet est fabriqué, une phase de déploiement lors de laquelle cet objet est associé physiquement à l'élément d'observation correspondant, une phase de fonctionnement correspondant alors au fonctionnement nominal de cet objet et une phase de démantèlement lors de laquelle l'objet correspondant est démantelé.

Lors de la phase de fabrication de l'objet 12-1, le module de renforcement de sécurité 42 vérifie ou déploie l'ensemble des composantes de sécurité de l'objet 12-1 telles que l'implémentation de la technologie PUF et TRNG par le microcontrôleur 22, les moyens de vérification d'intégrité de la mémoire 23 ainsi que les partitions TrustZone.

Lors de la phase de fabrication et/ou la phase de déploiement, le module d'observation 41 observe l'ensemble des échanges de données effectués en relation avec l'objet 12-1 et à partir de cette observation, détecte éventuellement au moins une anomalie relative à cet objet 12-1.

Ces échanges comprennent des échanges entre les objets connectés ainsi que des échanges avec tout autre dispositif connecté à la passerelle 15.

Chaque anomalie est détectée en utilisant par exemple une technique d'apprentissage automatique. Une base d'apprentissage est par exemple ainsi générée et est enrichie avec chaque nouvel objet connecté détecté.

Lors de la phase de déploiement, le module d'enregistrement 43 permet de découvrir l'objet connecté 12-1, de l'authentifier et de l'enregistrer notamment dans le système de supervision 16.

À la suite de cette identification, le système de supervision 16 génère une ou plusieurs clefs de chiffrement fixes destinées à cet objet et les distribue via la passerelle 15.

Avantageusement selon l'invention, lors de la phase de déploiement, le module d'enregistrement 43 permet d'effectuer un appairage sécurisé de l'objet connecté.

Comme expliqué précédemment, cet appairage est effectué sans participation de l'utilisateur.

Lors de la phase de fonctionnement, le module de renforcement de sécurité 42 utilise une routine de mise à jour de logiciels qui permet de détecter toute modification non-autorisée d'au moins une ressource logicielle stockée dans la mémoire 23 de l'objet 12-1 ou la présence d'un logiciel non-autorisé dans cette mémoire.

Pour cela, cette routine utilise les moyens de vérification d'intégrité de cet objet 12-1 qui tracent alors chaque modification effectuée en relation avec la mémoire 23.

Lorsque cette routine détecte une modification non-autorisée d'au moins une ressource logicielle stockée dans la mémoire 23 ou la présence d'un logiciel non-autorisé dans cette mémoire 23, elle déclenche une mise à jour complète ou partielle des ressources logicielles stockées dans la mémoire 23.

Dans le cas contraire, elle délivre par exemple à cet objet une attestation de conformité via une routine d'attestation dédiée. Cette attestation est valable par exemple pour une durée prédéterminée.

Lors de la phase de fonctionnement, le module d'enregistrement 43 identifie éventuellement un nouvel objet et assure son appairage dans le système.

Lors de la phase de démantèlement, le module de renforcement de sécurité 42 active les moyens de désactivation de l'objet 12-1 via une routine de désactivation dédiée.

Ensuite, les moyens de désactivation suppriment alors au moins certaines des ressources logicielles stockées dans la mémoire 23 de cet objet 12-1.

Avantageusement, ces moyens de désactivation suppriment en outre la ou chaque clef de chiffrement utilisée par le module de communication 25 de cet objet 12-1.

Par la suite, l'objet connecté 12-1 peut être démantelé et éventuellement, réutilisé. Pour cela il suffit juste de fournir de nouvelles ressources logicielles et une ou plusieurs clefs de chiffrement.

On conçoit alors que la présente invention présente un certain nombre d'avantages.

Tout d'abord, l'architecture selon l'invention permet d'assurer la sécurité de chaque objet connecté pendant chaque phase de vie de cet objet.

Ainsi, les objets connectés se trouvent sécurisés durant tout le cycle de leur vie et peuvent être réutilisés éventuellement après, tout en gardant intacte la chaine de sécurité initiale et assurant alors une nouvelle chaine.

L'architecture selon l'invention met ainsi en oeuvre un service d'établissement et de contrôle de clefs de chiffrement, un service de contrôle d'activité des objets connectés et un service de mise à jour de ces objets.

On conçoit également que d'autres exemples de réalisation restent également possibles, avec des choix technologiques qui pourraient varier selon le constructeur, et la conformité des mécanismes/protocoles.

## Revendications

1. Architecture d'échanges (10) de données d'intérêt comprenant une pluralité d'objets connectés (12-1,...,12-3) à ressources contraintes et un système de sécurité (40) de ces objets connectés (12-1,...,12-3) durant un cycle de vie complet de ces objets constitué d'une phase de fabrication, d'une phase de déploiement, d'une phase de fonctionnement et d'une phase de démantèlement ;
chaque objet connecté (12-1,..., 12-3) comprenant :
- un microcontrôleur de contrôle d'accès (22) apte à fournir un identifiant physique unique de l'objet connecté (12-1,..., 12-3) ;
- une mémoire (23) apte à stocker des ressources logicielles ;
- un processeur (24) apte à générer des données d'intérêt en utilisant au moins certaines des ressources logicielles stockées dans la mémoire (23), le processeur (24) définissant des moyens de désactivation ;
- un module de communication (25) apte à communiquer des données d'intérêt générées par le processeur (24) sous une forme chiffrée en utilisant au moins une clef de chiffrement ;
le système de sécurité (40) étant apte à :
- vérifier le microcontrôleur de contrôle d'accès (22) et l'intégrité de la mémoire (23) de chaque objet (12-1,..., 12-3), lors de la phase de fabrication de cet objet (12-1,...,12-3) ;
- découvrir, identifier et enregistrer chaque nouvel objet (12-1,... ,12-3) connecté en utilisant l'identifiant physique unique de cet objet (12-1,...,12-3), lors de la phase de déploiement de cet objet (12-1,..., 12-3) ;
- mettre à jour des ressources logicielles stockées dans la mémoire (23) de chaque objet connecté (12-1,..., 12-3), lors de la phase de fonctionnement de cet objet (12-1,..., 12-3) ;
- actionner les moyens de désactivation de chaque objet connecté (12-1,..., 12-3) pour désactiver le fonctionnement de cet objet connecté (12-1,...,12-3), lors de la phase de démantèlement de cet objet (12-1,..., 12-3).

2. Architecture (10) selon la revendication 1, dans laquelle le système de sécurité (40) est apte en outre à observer les données numériques échangées avec chaque objet connecté (12-1,...,12-3) lors des phases de fabrication et de déploiement de cet objet (12-1,..., 12-3), et à partir de cette observation, à détecter au moins une anomalie relative à cet objet connecté (12-1,..., 12-3).

3. Architecture (10) selon la revendication 2, dans laquelle chaque anomalie est détectée en utilisant une technique d'apprentissage automatique.

4. Architecture (10) selon l'une quelconque des revendications précédentes, dans laquelle, lors de la phase de déploiement de chaque objet connecté (12-1,..., 12-3), le système de sécurité (40) est apte en outre à distribuer au module de communication (25) de cet objet connecté (12-1,..., 12-3) une ou plusieurs clefs de chiffrement utilisables pour chiffrer l'ensemble des données d'intérêt sortant de ce module (25).

5. Architecture (10) selon l'une quelconque des revendications précédentes, dans laquelle, lors de la phase de fonctionnement de chaque objet connecté (12-1,...,12-3), le système de sécurité (40) est apte en outre à détecter une modification non-autorisée d'au moins une ressource logicielle stockée dans la mémoire (23) de cet objet (12-1,..., 12-3) ou la présence d'un logiciel non-autorisé dans cette mémoire (23).

6. Architecture (10) selon la revendication 5, dans laquelle le système de sécurité (40) est apte à déclencher une mise à jour des ressources logicielles stockées dans la mémoire (23) d'un objet connecté (12-1,...,12-3) à la suite de la détection d'une modification non-autorisée d'au moins une ressource logicielle stockée dans la mémoire (23) de cet objet (12-1,..., 12-3) ou la présence d'un logiciel non-autorisé dans cette mémoire (23).

7. Architecture (10) selon la revendication 5 ou 6, dans laquelle le système de sécurité (40) est apte en outre à délivrer une attestation de conformité à un objet connecté (12-1,..., 12-3) lorsqu'il ne détecte aucune modification non-autorisée d'au moins une ressource logicielle stockée dans la mémoire (23) de cet objet (12-1,... ,12-3) et aucune présence d'un logiciel non-autorisé dans cette mémoire (23).

8. Architecture (10) selon l'une quelconque des revendications précédentes, dans laquelle, lors de la phase de démantèlement, les moyens de désactivation de chaque objet connecté (12-1,..., 12-3) sont aptes à supprimer au moins certaines des ressources logicielles stockées dans la mémoire (23) de cet objet (12-1,...,12-3) et la ou chaque clef de chiffrement utilisée par le module de communication (25) de cet objet (12-1,...,12-3).

9. Architecture (10) selon l'une quelconque des revendications précédentes, comprenant en outre un système de supervision (16) distant et une passerelle (15) raccordant ce système de supervision (16) à chacun des objets connectés (12-1,...,12-3), le système de sécurité (40) étant intégré dans la passerelle (15).

10. Architecture (10) selon la revendication 9, dans laquelle le système de supervision (16) est apte à générer la ou chaque clef de chiffrement pour le module de communication (25) de chaque objet connecté (12-1,..., 12-3) pour la distribuer via la passerelle (15).

## Patentansprüche

1. Austauscharchitektur (10) von Daten von Interesse, umfassend eine Vielzahl von verbundenen Objekten (12-1, ..., 12-3) mit beschränkten Ressourcen und ein Sicherheitssystem (40) dieser verbundenen Objekte (12-1, ..., 12-3) während eines vollständigen Lebenszyklus dieser Objekte, der aus einer Herstellungsphase, einer Einsatzphase, einer Betriebsphase und einer Abbauphase besteht;
jedes verbundene Objekt (12-1, ..., 12-3) umfassend:
- einen Zugangskontroll-Mikrocontroller (22), der angepasst ist, um eine eindeutige physische Kennung des verbundenen Objekts (12-1, ..., 12-3) bereitzustellen;
- einen Speicher (23), der angepasst ist, um Software-Ressourcen zu speichern;
- einen Prozessor (24), der angepasst ist, um Daten von Interesse zu erzeugen, indem er mindestens gewisse der im Speicher (23) gespeicherten Softwareressourcen verwendet, wobei der Prozessor (24) Deaktivierungseinrichtungen definiert;
- ein Kommunikationsmodul (25), das angepasst ist, um die von dem Prozessor (24) erzeugten Daten von Interesse in verschlüsselter Form unter Verwendung mindestens eines Chiffrierschlüssels zu kommunizieren;
wobei das Erfassungsmodul (40) zu Folgendem angepasst ist:
- Überprüfen des Zugangskontroll-Mikrocontroller (22) und der Integrität des Speichers (23) von jedem Objekt (12-1, ..., 12-3) während der Herstellungsphase dieses Objekts (12-1, ..., 12-3);
- Entdecken, Identifizieren und Registrieren jedes neuen Objekts (12-1, ..., 12-3), das unter Verwendung der eindeutigen physischen Kennung dieses Objekts (12-1, ..., 12-3) während der Einsatzphase dieses Objekts (12-1, ..., 12-3) verbunden wird;
- Aktualisieren von in dem Speicher (23) von jedem verbundenen Objekts (12-1, ..., 12-3) gespeicherten Software-Ressourcen während der Betriebsphase dieses Objekts (12-1, ..., 12-3);
- Betätigen der Deaktivierungseinrichtungen von jedem verbundenen Objekt (12-1, ..., 12- 3), um die Funktion dieses verbundenen Objekts (12-1, ..., 12-3) zu deaktivieren, während der Abbauphase dieses Objekts (12-1, ..., 12-3).

2. Architektur (10) nach Anspruch 1, wobei das Sicherheitssystem (40) ferner angepasst ist, um die digitalen Daten zu beobachten, die mit jedem verbundenen Objekt (12-1, ..., 12-3) während der Herstellungs- und Einsatzphasen dieses Objekts (12-1, ..., 12-3) ausgetauscht werden, und ausgehend von dieser Beobachtung, Erkennen mindestens einer Anomalie in Bezug auf dieses verbundene Objekt (12-1, ..., 12-3).

3. Architektur (10) nach Anspruch 2, wobei jede Anomalie unter Verwendung einer Technik maschinellen Lernens erkannt wird.

4. Architektur (10) nach einem der vorherigen Ansprüche, wobei während der Einsatzphase von jedem verbundenen Objekt (12-1, ..., 12-3) das Sicherheitssystem (40) ferner angepasst ist, um an das Kommunikationsmodul (25) dieses verbundenen Objekts (12-1, ..., 12-3) einen oder mehrere Verschlüsselungsschlüssel zu verteilen, die verwendet werden können, um die Gesamtheit der aus diesem Modul (25) stammenden Daten von Interesse zu verschlüsseln.

5. Architektur (10) nach einem der vorherigen Ansprüche, wobei während der Betriebsphase von jedem verbundenen Objekt (12-1, ..., 12-3) das Sicherheitssystem (40) ferner angepasst ist, um eine unautorisierte Änderung mindestens einer in dem Speicher (23) dieses Objekts (12-1, ..., 12-3) gespeicherten Software-Ressource oder das Vorhandensein einer unautorisierten Software in diesem Speicher (23) zu erkennen.

6. Architektur (10) nach Anspruch 5, wobei das Sicherheitssystem (40) angepasst ist, um nach Erkennen einer nicht autorisierten Änderung mindestens einer Software-Ressource, die in dem Speicher (23) dieses Objekts (12-1, ..., 12-3) gespeichert ist. oder das Vorhandensein von nicht autorisierter Software in diesem Speicher (23) eine Aktualisierung der Software-Ressourcen auszulösen, die in dem Speicher (23) eines verbundenen Objekts (12-1, ..., 12-3) gespeichert sind.

7. Architektur (10) nach Anspruch 5 oder 6, wobei das Sicherheitssystem (40) ferner angepasst ist, um eine Konformitätsbescheinigung für ein verbundenes Objekt (12-1, ..., 12-3) zu erteilen, wenn es keine unautorisierte Änderung mindestens einer in dem Speicher (23) dieses Objekts (12-1, ..., 12-3) gespeicherten Software-Ressource und kein Vorhandensein einer unautorisierten Software in diesem Speicher (23) erkennt.

8. Architektur (10) nach einem der vorherigen Ansprüche, in der während der Abbauphase die Deaktivierungseinrichtungen von jedem verbundenen Objekt (12-1, ..., 12-3) angepasst sind, um mindestens einige der im Speicher (23) dieses Objekts (12-1, ..., 12-3) gespeicherten Software-Ressourcen und den oder jeden von dem Kommunikationsmodul (25) dieses Objekts (12-1, ..., 12-3) verwendeten Verschlüsselungsschlüssel zu löschen.

9. Architektur (10) nach einem der vorherigen Ansprüche, ferner umfassend ein entferntes Überwachungssystem (16) und ein Gateway (15), das dieses Überwachungssystem (16) mit jedem der verbundenen Objekte (12-1, ..., 12-3) verbindet, wobei das Sicherheitssystem (40) ist in das Gateway (15) integriert ist.

10. Architektur (10) nach Anspruch 9, wobei das Überwachungssystem (16) angepasst ist, um den oder jeden Verschlüsselungsschlüssel für das Kommunikationsmodul (25) von jedem verbundenen Objekt (12-1, ..., 12-3) zu erzeugen, um ihn über das Gateway (15) zu verteilen.

## Claims

1. A data of interest exchange architecture (10) comprising a plurality of resource constrained connected objects (12-1, ..., 12-3) and a security system (40) for these connected objects (12-1, ..., 12-3) during a complete life cycle of these objects consisting of a manufacturing phase, a deployment phase, an operating phase and a dismantling phase;
each connected object (12-1, ..., 12-3) comprising:
- an access control microcontroller (22) capable of providing a unique physical identifier of the connected object (12-1, ..., 12-3);
- a memory (23) capable of storing software resources;
- a processor (24) adapted to generate data of interest using at least some of the software resources stored in the memory (23), the processor (24) defining disabling means;
- a communication module (25) capable of communicating data of interest generated by the processor (24) in encrypted form using at least one encryption key;
the detection module (40) being able to:
- check the access control microcontroller (22) and the integrity of the memory (23) of each object (12-1, ..., 12-3), during the manufacturing phase of this object (12-1, ..., 12-3);
- discover, identify and record each new object (12-1, ..., 12-3) connected using the unique physical identifier of that object (12-1, ..., 12-3), during the deployment phase of that object (12-1, ..., 12-3);
- update software resources stored in the memory (23) of each connected object (12-1, ..., 12-3), during the operation phase of this object (12-1, ..., 12-3);
- actuate the deactivation means of each connected object (12-1, ..., 12-3) to deactivate the operation of this connected object (12-1, ..., 12-3), during the dismantling phase of this object (12-1, ..., 12-3).

2. Architecture (10) according to claim 1, in which the security system (40) is further able to observe the digital data exchanged with each connected object (12-1, ..., 12-3) during the manufacturing and deployment phases of this object (12-1, ..., 12-3), and from this observation, to detect at least one anomaly relating to this connected object (12-1, ..., 12-3).

3. Architecture (10) of claim 2, wherein each anomaly is detected using a machine learning technique.

4. Architecture (10) according to any one of the preceding claims, in which, during the deployment phase of each connected object (12-1, ..., 12-3), the security system (40) is also able to distribute to the communication module (25) of this connected object (12-1, ..., 12-3) one or more encryption keys that can be used to encrypt all the data of interest leaving this module (25).

5. Architecture (10) according to any of the preceding claims, wherein, during the operation phase of each connected object (12-1, ..., 12-3), the security system (40) is further adapted to detect an unauthorised modification of at least one software resource stored in the memory (23) of this object (12-1, ..., 12-3) or the presence of unauthorised software in this memory (23).

6. Architecture (10) according to claim 5, wherein the security system (40) is able to trigger an update of the software resources stored in the memory (23) of a connected object (12-1, ..., 12-3) following the detection of an unauthorised modification of at least one software resource stored in the memory (23) of this object (12-1, ..., 12-3) or the presence of unauthorised software in this memory (23).

7. Architecture (10) according to claim 5 or 6, wherein the security system (40) is further adapted to issue a certificate of compliance to a connected object (12-1, ..., 12-3) when it detects no unauthorised modification of at least one software resource stored in the memory (23) of this object (12-1, ..., 12-3) and no presence of unauthorised software in this memory (23).

8. Architecture (10) according to any one of the preceding claims, in which, during the dismantling phase, the means for deactivating each connected object (12-1, ..., 12-3) are capable of deleting at least some of the software resources stored in the memory (23) of this object (12-1, ..., 12-3) and the or each encryption key used by the communication module (25) of this object (12-1, ..., 12-3).

9. Architecture (10) according to any of the preceding claims, further comprising a remote supervision system (16) and a gateway (15) connecting this supervision system (16) to each of the connected objects (12-1, ..., 12-3), the safety system (40) being integrated in the gateway (15).

10. The architecture (10) according to claim 9, wherein the supervisory system (16) is adapted to generate the or each encryption key for the communication module (25) of each connected object (12-1, ..., 12-3) for distribution via the gateway (15).
